# EUROPÄISCHE PATENTANMELDUNG

(11) **EP 4 527 516 A1**
(43) Veröffentlichungstag der Anmeldung: **26.03.2025**
(21) Anmeldenummer: 23198542.5
(22) Anmeldetag: 20.09.2023
(51) Int. Cl.: B21D 5/02, B21D 5/04, B21D 55/00, B30B 15/28, F16P 3/14, B21D 5/00

(54) **BIEGEMASCHINE UND VERFAHREN ZUM BETREIBEN EINER BIEGEMASCHINE**

(71) Anmelder: Fiessler Elektronik GmbH & Co. KG, 73773 Aichwald (DE)
(72) Erfinder: Fiessler, Lutz, 73773 Aichwald (DE); Müller, Frank, 73207 Plochingen (DE)
(74) Vertreter: Patentanwälte Magenbauer & Kollegen Partnerschaft mbB

(57) **Zusammenfassung**

Die Erfindung betrifft eine Biegemaschine (1; 99) mit einem Maschinenbett (2), das einen Werkstücktisch (3) mit einer Werkstückauflagefläche (4) zum Auflegen eines Werkstücks (41; 47) aufweist, sowie mit einem linearbeweglich längs einer Bewegungsachse (24) am Maschinenbett (2) gelagerten Oberwerkzeug (21), das eine benachbart zur Werkstückauflagefläche (4) angeordnete Unterkante (23) aufweist, wobei die Unterkante (23) mit der Bewegungsachse (24) eine Bewegungsebene (25) begrenzt, die einen Handhabungsraum (71) von einem Werkstückaufnahmeraum (72) trennt, wobei im Handhabungsraum (71) eine erste optische Sicherungseinrichtung (51) und im Werkstückaufnahmeraum (72) eine zweite optische Sicherungseinrichtung (61) angeordnet sind, sowie mit einer Sicherheitssteuerung (81), die für eine Auswertung von Sensorsignalen der optischen Sicherungseinrichtungen sowie für eine Abschaltung einer dem Oberwerkzeug (21) zugeordneten Antriebseinrichtung (17) ausgebildet ist, wobei die Sicherheitssteuerung (81) für eine Umschaltung zwischen einer ersten Betriebsart, bei der ausschließlich die ersten Sensorsignale ausgewertet werden, und einer zweiten Betriebsart, bei der ausschließlich die zweiten Sensorsignale ausgewertet werden, ausgebildet ist.

## Beschreibung

Die Erfindung betrifft eine Biegemaschine und ein Verfahren zum Betreiben einer Biegemaschine.

Die EP 2 633 925 A1 offenbart eine Schwenkbiegemaschine mit einem Maschinenbett, das einen Werkstücktisch mit einer Werkstückauflagefläche umfasst, sowie mit einem Werkstückhalter zur Festlegung eines Werkstücks am Werkstücktisch und mit einer schwenkbeweglich dem Werkstücktisch zugeordneten Biegewange, die mit Schwenkgelenken am Maschinenbett festgelegt ist, wobei Schwenkachsen der Schwenkgelenke konzentrisch zueinander und parallel zur Werkstückauflagefläche ausgerichtet sind, sowie mit einer optischen Überwachungseinrichtung zur Überwachung einer Schließbewegung des Werkstückhalters, mit einem optischen Sender zur Aussendung eines Kontrollstrahls und mit einem dem Sender gegenüberliegend angeordneten Empfänger für den Kontrollstrahl, wobei der Sender und der Empfänger den Schwenkgelenken derart zugeordnet sind, dass der Kontrollstrahl zwischen Sender und Empfänger in einem um die Schwenkachse ausgebildeten Hüllzylinder verläuft.

Die Aufgabe der Erfindung besteht darin, eine Biegemaschine bereitzustellen, mit der Werkstücke bearbeitet werden können, die mehrere Biegebereiche mit Biegelinien aufweisen, wobei die nicht parallel zueinander ausgerichtet sein müssen. Diese Aufgabe wird gemäß einem ersten Erfindungsaspekt mit einer Biegemaschine gelöst, die ein Maschinenbett aufweist, an dem ein Werkstücktisch ausgebildet ist, der eine zum Auflegen eines Werkstücks ausgebildete Werkstückauflagefläche aufweist, und die ein linearbeweglich längs einer Bewegungsachse am Maschinenbett gelagertes Oberwerkzeug aufweist, das eine benachbart zur Werkstückauflagefläche angeordnete Unterkante aufweist, wobei die Unterkante mit der Bewegungsachse eine Bewegungsebene begrenzt, in der die Unterkante zwischen einer Öffnungsstellung für das Oberwerkzeug und einer Schließstellung für das Oberwerkzeug beweglich ist, wobei die Bewegungsebene einen Handhabungsraum, der sich ausgehend vom Oberwerkzeug in Richtung einer Vorderkante der Werkstückauflagefläche erstreckt, von einem Werkstückaufnahmeraum trennt, der sich von dem Oberwerkzeug zu einer Hinterkante der Werkstückauflagefläche erstreckt und wobei im Handhabungsraum eine erste optische Sicherungseinrichtung und im Werkstückaufnahmeraum eine zweite optische Sicherungseinrichtung angeordnet sind, sowie mit einer Sicherheitssteuerung, die für eine Auswertung von ersten Sensorsignalen der ersten optischen Sicherungseinrichtung und von zweiten Sensorsignalen der zweiten optischen Sicherungseinrichtung sowie für eine Abschaltung einer dem Oberwerkzeug zugeordneten Antriebseinrichtung in Abhängigkeit von den ersten und/oder zweiten Sensorsignalen ausgebildet ist, wobei die Sicherheitssteuerung für eine Umschaltung zwischen einer ersten Betriebsart, bei der ausschließlich die ersten Sensorsignale ausgewertet werden, und einer zweiten Betriebsart, bei der ausschließlich die zweiten Sensorsignale ausgewertet werden, ausgebildet ist.

Die Biegemaschine kann beispielsweise als Abkantpresse oder als Schwenkbiegemaschine ausgebildet sein.

Bei einer Abkantpresse findet eine lineare Annäherungsbewegung eines Oberwerkzeugs gegenüber einem dem Werkstücktisch zugeordneten Unterwerkzeugs statt, wobei das Oberwerkzeug eine Unterkante aufweist, die bei der Durchführung des Umformvorgangs demjenigen Bereich des Oberwerkzeugs darstellt, der zuerst in Kontakt mit einer Oberseite des Werkstücks kommt.

Eine Profilierung des Oberwerkzeugs in einer quer zur Unterkante des Oberwerkzeugs ausgerichteten Querschnittsebene entspricht hierbei zumindest im Wesentlichen einer Werkstückkontur, die die Oberseite des zu bearbeitenden Werkstücks nach Durchführung des Abkantvorgangs aufweist. Ferner entspricht eine Profilierung des Unterwerkzeugs in der quer zur Unterkante des Oberwerkzeugs ausgerichteten Querschnittsebene zumindest im Wesentlichen einer Werkstückkontur einer Unterseite des zu bearbeitenden Werkstücks nach Durchführung des Abkantvorgangs. Ein Unterwerkzeug einer Abkantpresse kann auch derart konfiguriert sein, dass eine dem Oberwerkzeug zugewandte Oberseite des Unterwerkzeugs den Werkstücktisch und damit auch die Werkstückauflagefläche bildet.

Bei einer Schwenkbiegemaschine wird das Werkstück zunächst mit einem als Klemmwange ausgebildeten Oberwerkzeug auf die Werkstückaufnahmefläche des Werkstücktischs angepresst. Hierbei wird eine Unterkante des Oberwerkzeugs von einer Kante der Klemmwange gebildet, die einem Benutzer der Biegemaschine bei der bestimmungsgemäßen Nutzung der Biegemaschine zugewandt ist und einen minimalen Abstand der Klemmwange gegenüber der Werkstückaufnahmefläche aufweist. In einem nachfolgenden Biegeschritt erfolgt eine Schwenkbewegung einer schwenkbeweglich am Werkstücktisch gelagerten Biegewange, die einen über den Werkstücktisch abragenden Endbereich des Werkstücks um die Unterkante der Klemmwange herum biegt.

Sowohl bei einer Abkantpresse als auch bei einer Schwenkbiegemaschine stellt das Oberwerkzeug eine potenzielle Gefahrenquelle für den Benutzer dar, da sich bei der Annäherungsbewegung des Oberwerkzeugs an den Werkstücktisch ein vom Oberwerkzeug und dem Werkstücktisch begrenzter Arbeitsspalt verkleinert und für die Durchführung des Umformvorgangs verschwindet (also gegen Null geht) und hierdurch eine Quetschgefahr beispielsweise für die Finger oder die Arme des Benutzers entstehen kann.

Um die Gefahr einer Quetschung von Körperteilen eines Benutzers zu minimieren, weist die Biegemaschine eine erste optische Sicherungseinrichtung, eine zweite optische Sicherungseinrichtung sowie eine elektrisch mit der ersten optischen Sicherungseinrichtung und der zweiten optischen Sicherungseinrichtung verbundene Sicherheitssteuerung auf.

Die Sicherheitssteuerung ist zur Verarbeitung von Sensorsignalen der ersten optischen Sicherungseinrichtung und der zweiten optischen Sicherungseinrichtung sowie zur Abschaltung einer dem Oberwerkzeug zugeordneten Antriebseinrichtung ausgebildet. Beispielhaft ist vorgesehen, dass dem Oberwerkzeug eine elektromechanische Antriebseinrichtung oder eine elektrohydraulische Antriebseinrichtung zugeordnet ist, sodass die Sicherheitssteuerung durch Abschaltung einer elektrischen Versorgung der jeweiligen Antriebseinrichtung die Annäherungsbewegung zwischen dem Oberwerkzeug und dem Werkstücktisch zum Stillstand bringen kann oder gegebenenfalls eine gegenläufige Öffnungsbewegung des Oberwerkzeugs gegenüber dem Werkstücktisch hervorrufen kann.

Die erste optische Sicherungseinrichtung und die zweite optische Sicherungseinrichtung sind derart angeordnet, dass sie bei einem Eingriff eines Benutzers in einen definierten Sicherungsraum ein Sensorsignal an die Sicherheitssteuerung bereitstellen, das zur Abschaltung der Antriebseinrichtung führt. Der Sicherungsraum wird hierzu in einen Handhabungsraum und in einen Werkstückaufnahmeraum unterteilt. Hierbei repräsentiert der Handhabungsraum einen Raumbereich, der sich ausgehend vom Oberwerkzeug in Richtung zu einer Vorderkante der Werkstückauflagefläche erstreckt und in den der Benutzer bei der Handhabung von Werkstücken typischerweise eingreift. Der Werkstückaufnahmeraum erstreckt sich ausgehend vom Oberwerkzeug in Richtung einer Hinterkante der Werkstückauflagefläche und dient im Wesentlichen der Aufnahme des Werkstücks, wenngleich auch für den Werkstückaufnahmeraum nicht ausgeschlossen werden kann, dass der Benutzer hierin eingreift.

Eine Grenze zwischen dem Handhabungsraum und dem Werkstückaufnahmeraum wird durch eine Bewegungsebene gebildet, die von der Unterkante des Oberwerkzeugs und einer Bewegungsachse des Oberwerkzeugs aufgespannt wird. Typischerweise ist die Bewegungsebene quer, also in einem rechen Winkel, zur Werkstückauflagefläche ausgerichtet, die üblicherweise eben und horizontal ausgerichtet ist. Die Bewegungsebene ist diejenige Ebene, in der die Unterkante des Oberwerkzeugs bei einer Verlagerung zwischen einer Öffnungsstellung und einer Schließstellung bewegt wird, ist somit typischerweise eine in vertikaler (lotrechter) Richtung ausgerichtete Ebene.

Bevorzugt ist vorgesehen, dass die im Handhabungsraum angeordnete erste optische Sicherungseinrichtung einen, insbesondere horizontalen, Abstand von 10 mm bis 20 mm von der Bewegungsebene aufweist und dass die im Werkstückaufnahmeraum angeordnete zweite optische Sicherungseinrichtung einen, insbesondere horizontalen, Abstand von 0 mm bis 10 mm von der Bewegungsebene aufweist.

Um eine Bearbeitung unterschiedlich ausgebildeter Werkstücke gewährleisten zu können ist die Sicherheitssteuerung derart ausgebildet, dass sie zwischen einer ersten Betriebsart, die auf eine erste Werkstückkonfiguration ausgerichtet ist, und einer zweiten Betriebsart, die auf eine zweite Werkstückkonfiguration ausgerichtet ist, umgeschaltet werden kann.

Bei der ersten Betriebsart wird von einer Werkstückkonfiguration ausgegangen, bei der das Werkstück mit einer Unterseite auf der Werkstückauflagefläche aufliegt und ausgehend von einer parallel zur Unterseite ausgerichteten Oberseite des Werkstücks eine Werkstückkontur von der Oberseite des Werkstücks in vertikaler Richtung nach oben abragt. Diese Werkstückkontur erstreckt sich derart in Richtung des Oberwerkzeugs, dass nach einer Positionierung des Werkstücks mit der für die Umformung vorgesehenen Biegelinie unterhalb der Unterkante des Oberwerkzeugs eine Blockierung der im Werkstückaufnahmeraum angeordneten zweiten optischen Sicherungseinrichtung stattfinden würde, die zu einer Abschaltung der Antriebseinrichtung für das Oberwerkzeug durch die Sicherheitssteuerung führen würde. Dementsprechend ist es für die Durchführung des Bearbeitungsvorgangs bei einem derart geformten Werkstück erforderlich, ausschließlich Sensorsignale der ersten optischen Sicherungseinrichtung zu verarbeiten.

Bei der zweiten Betriebsart wird von einer Werkstückkonfiguration ausgegangen, bei der das Werkstück mit einer Unterseite auf der Werkstückauflagefläche aufliegt und ausgehend von einer parallel zur Unterseite ausgerichteten Oberseite des Werkstücks eine Werkstückkontur von der Oberseite des Werkstücks in vertikaler Richtung nach oben abragt. Diese Werkstückkontur erstreckt sich derart in Richtung des Oberwerkzeugs, dass nach einer Positionierung des Werkstücks mit der für die Umformung vorgesehenen Biegelinie unterhalb der Unterkante des Oberwerkzeugs eine Blockierung der im Handhabungsraum angeordneten ersten optischen Sicherungseinrichtung stattfinden würde, die zu einer Abschaltung der Antriebseinrichtung für das Oberwerkzeug durch die Sicherheitssteuerung führen würde. Dementsprechend ist es für die Durchführung des Bearbeitungsvorgangs bei einem derart geformten Werkstück erforderlich, ausschließlich Sensorsignale der zweiten optischen Sicherungseinrichtung zu verarbeiten.

Vorteilhafte Weiterbildungen der Erfindung sind Gegenstand der Unteransprüche.

Zweckmäßig ist es, wenn die erste optische Sicherungseinrichtung eine erste untere Strahlquelle aufweist, die für eine Bereitstellung eines ersten unteren optischen Strahls parallel zur Unterkante ausgebildet ist, und die einen ersten unteren Strahlenempfänger aufweist, der zum Empfang des ersten unteren optischen Strahls ausgebildet ist, und dass die erste optische Sicherungseinrichtung eine erste obere Strahlquelle aufweist, die für eine Bereitstellung eines ersten oberen optischen Strahls parallel zur Unterkante ausgebildet ist, und einen ersten oberen Strahlenempfänger aufweist, der zum Empfang des ersten oberen optischen Strahls ausgebildet ist, wobei die erste untere Strahlquelle einen geringeren Abstand zur Werkstückauflagefläche als die erste obere Strahlquelle aufweist. Bei der ersten unteren Strahlquelle und bei der ersten oberen Strahlquelle handelt es sich vorzugsweise jeweils um Laserquellen, die jeweils ein als erster unterer optischer Strahl bzw. als erster oberer optischer Strahl bezeichnetes Strahlenbündel von parallel ausgerichteten Strahlen auf den jeweils gegenüberliegend angeordneten ersten unteren Strahlenempfänger bzw. ersten oberen Strahlenempfänger ausgeben. Die Strahlenquellen können vorzugsweise zur Bereitstellung von Strahlen einer einzigen Wellenlänge oder zur Bereitstellung von Strahlen in einem vorgegebenen Wellenlängenspektrum ausgebildet sein. Besonders bevorzugt ist vorgesehen, dass die Strahlen in dem Wellenlängenbereich des sichtbaren Lichts (380nm bis 780 nm) und/oder in den angrenzenden Infrarot- bzw. Ultraviolett-Wellenlängenbereichen angesiedelt sind.

Beim ersten unteren Strahlenempfänger und beim ersten oberen Strahlenempfänger handelt es sich beispielsweise jeweils um eine für die bereitgestellten optischen Strahlen empfindliche, insbesondere lichtempfindliche, Diode oder jeweils um eine Anordnung mehrerer lichtempfindlicher Dioden oder um einen Kamerachip, insbesondere einen CCD-Chip. Bei einer Variante der ersten optischen Sicherungseinrichtung kann vorgesehen sein, dass von einer einzigen Strahlenquelle ein großes optisches Strahlenbündel bereitgestellt wird, das mit Hilfe eines optischen Systems in ein definiertes Strahlenfeld oder in mehrere kleinere Strahlenbündel aufgefächert wird. Bei einer weiteren Variante der ersten optischen Sicherungseinrichtung kann vorgesehen sein, dass die parallel zueinander ausgerichteten optischen Strahlen von einem gemeinsamen Strahlenempfänger, insbesondere einem Kamerachip, empfangen werden und eine diskrete Auswertung für die einzelnen optischen Strahlen und die daraus resultierenden Sensorsignale durch die Sicherheitssteuerung vorgenommen wird. Vorzugsweise ist vorgesehen, dass der erste untere optische Strahl und der erste obere optische Strahl in einer Strahlenebene angeordnet sind, die parallel zur Bewegungsebene ausgerichtet ist. Typischerweise ist vorgesehen, dass der erste untere optische Strahl parallel zur Unterkante und zur Werkstückauflagefläche ausgerichtet ist und einen Abstand von ca. 6mm bis 10mm von der Werkstückauflagefläche aufweist und dass der erste obere optische Strahl parallel zum ersten unteren optischen Strahl ausgerichtet ist und einen Abstand von ca. 12mm bis 20mm von der Werkstückauflagefläche aufweist. Gegebenenfalls können auch noch weitere Strahlquellen und Strahlenempfänger vorgesehen werden, um zusätzliche Schutzfunktionen zu realisieren.

Bevorzugt ist vorgesehen, dass die zweite optische Sicherungseinrichtung eine zweite untere Strahlquelle aufweist, die für eine Bereitstellung eines zweiten unteren optischen Strahls parallel zur Unterkante ausgebildet ist, und einen zweiten unteren Strahlenempfänger aufweist, der zum Empfang des zweiten unteren optischen Strahls ausgebildet ist, und dass die zweite optische Sicherungseinrichtung eine zweite obere Strahlquelle aufweist, die für eine Bereitstellung eines zweiten oberen optischen Strahls parallel zur Unterkante ausgebildet ist, und einen zweiten oberen Strahlenempfänger aufweist, der zum Empfang des zweiten oberen optischen Strahls ausgebildet ist, wobei zweite untere Strahlquelle einen geringeren Abstand zur Werkstückauflagefläche als die zweite obere Strahlquelle aufweist. Besonders bevorzugt ist vorgesehen, dass die Ausgestaltung der zweiten optischen Sicherungseinrichtung ähnlich oder identisch zur Ausgestaltung der ersten optischen Sicherungseinrichtung ist und sich lediglich dadurch von der ersten optischen Sicherungseinrichtung unterscheidet, dass die zweite optische Sicherungseinrichtung im Werkstückaufnahmeraum angeordnet ist.

Bei einer Weiterbildung der Erfindung ist vorgesehen, dass die Sicherheitssteuerung in der ersten Betriebsart dazu ausgebildet ist, während einer Schließbewegung des Oberwerkzeugs eine Auswertung eines Sensorsignals des ersten oberen Strahlenempfängers sowie eine Auswertung eines Sensorsignals des ersten unteren Strahlenempfängers vorzunehmen. Während des Schließvorgangs des Oberwerkzeugs, bei der eine Annäherung des Oberwerkzeugs an die Werkstückauflagefläche erfolgt, ist in der ersten Betriebsart eine fortdauernde Überwachung des unmittelbar vor dem Oberwerkzeug liegenden Abschnitts des Handhabungsraums vorgesehen, da in diesem Abschnitt bei der Schließbewegung des Oberwerkzeugs eine Quetschgefahr für den Benutzer besteht. Dies gilt sowohl für den Fall, dass es sich bei dem Oberwerkzeug um eine Klemmwange einer Schwenkbiegemaschine handelt, mit der das Werkstück vor dem Biegevorgang am Werkstücktisch festgelegt wird, oder für den Fall, dass es sich bei dem Oberwerkzeug um eine Biegewange einer Abkantpresse handelt. Zwar reduziert sich diese Quetschgefahr bei Unterschreiten eines ersten Handhabungsabstands zwischen der Unterkante und der Werkstückauflagefläche und zusätzlich bei Unterschreiten eines zweiten Handhabungsabstands zwischen der Unterkante und der Werkstückauflagefläche, allerdings kann durch die Aufrechterhaltung der Überwachung ein durchgehend hohes Sicherheitsniveau für den Schließvorgang aufrechterhalten werden. Rein exemplarisch beträgt der erste Handhabungsabstand ca. 12 mm, während der zweite Handhabungsabstand beispielhaft ca. 6 mm beträgt. Prinzipiell wird davon ausgegangen, dass das Oberwerkzeug ausgehend von einem maximalen Abstand zwischen Oberwerkzeug und Werkstückauflagefläche zunächst mit einer hohen Annäherungsgeschwindigkeit (Eilgang) an die Werkstückauflagefläche angenähert wird und auch bei einem Erreichen des ersten Handhabungsabstands und des zweiten Handhabungsabstands keine Umschaltung auf eine niedrige Annäherungsgeschwindigkeit (Schleichgang) erfolgt.

In weiterer Ausgestaltung der Erfindung ist vorgesehen, dass die Sicherheitssteuerung in der zweiten Betriebsart dazu ausgebildet ist, bei Unterschreiten eines ersten Eingriffsabstands zwischen der Unterkante und der Werkstückauflagefläche eine Ausblendung eines Sensorsignals des zweiten oberen Strahlenempfängers vorzunehmen und bei Unterschreiten eines zweiten Eingriffsabstands zwischen der Unterkante und der Werkstückauflagefläche eine Ausblendung eines Sensorsignals des zweiten unteren Strahlenempfängers vorzunehmen. Hierbei liegen die gleichen Überlegungen wie bei der ersten Betriebsart zugrunde, sodass für die zweite Betriebsart auf vorstehende Beschreibung für die erste Betriebsart verwiesen werden kann. Insbesondere ist vorgesehen, dass der erste Eingriffsabstand identisch zum ersten Handhabungsabstand ist und/oder dass der zweite Handhabungsabstand identisch zum zweiten Eingriffsabstand ist.

Für die zweiten Betriebsart wird davon ausgegangen, dass das Oberwerkzeug ausgehend von einem maximalen Abstand zwischen Oberwerkzeug und Werkstückauflagefläche zunächst mit einer hohen Annäherungsgeschwindigkeit (Eilgang) an die Werkstückauflagefläche angenähert wird. Ferner kann vorgesehen sein, dass - beispielsweise unter Zuhilfenahme eines dem Oberwerkzeug zugeordneten Wegmesssystems oder einer zugeordneten ersten Schalteinrichtung - kurz vor Erreichen des ersten Eingriffsabstands eine Umschaltung auf eine niedrige Annäherungsgeschwindigkeit (Schleichgang) erfolgt. Sofern die Sicherheitssteuerung aus einer zeitlichen Ableitung von Sensorsignalen des Wegmesssystems oder durch einen vorgegebenen zeitlichen Abstand für ein Eintreffen eines Schaltsignals einer zweiten Schalteinrichtung, die in einem definierten Abstand zur ersten Schalteinrichtung dem Oberwerkzeug zugeordnet ist, ermitteln kann, dass die niedrige Annäherungsgeschwindigkeit für das Oberwerkzeug kurz vor Erreichen des ersten Eingriffsabstands eingehalten ist, kann die Ausblendung des Sensorsignals des zweiten-oberen Strahlenempfängers vorgenommen werden. Hierbei liegt die Annahme zugrunde, dass bei der reduzierten, niedrigen Annäherungsgeschwindigkeit (Schleichgang) und dem verbleibenden Arbeitsspalt zwischen dem Oberwerkzeug und der Werkstückauflagefläche davon ausgegangen werden kann, dass ein Benutzer nicht mehr Gefahr läuft, in den verbleibenden Arbeitsspalt einzugreifen. Dennoch findet weiterhin eine Überwachung des verbleibenden Arbeitsspalts durch die zweite untere Strahlquelle und den zugeordneten zweiten unteren Strahlensensor statt, die erst dann durch Ausblendung des Sensorsignals des zweiten unteren Strahlenempfängers deaktiviert wird, wenn sich die Unterkante unmittelbar vor dem Erreichen des zweiten Eingriffsabstands befindet.

Zusätzlich gewährleistet die in der zweiten Betriebsart vorgesehene Überwachung des Werkstückaufnahmeraums auch eine Absicherung von Benutzereingriffen, die seitlich am Oberwerkzeug vorbei vorgenommen werden können, wie dies insbesondere bei Klemmwangen von Schwenkbiegemaschinen oder bei als Patrizen ausgebildeten Oberwerkzeugen von Abkantpressen der Fall sein kann, die sich nicht zwangsläufig über die gesamte Breite der jeweiligen Biegemaschine erstrecken müssen und damit einen seitlichen Eingriff in den Werkstückaufnahmeraum ermöglichen.

Bevorzugt ist vorgesehen, dass die Sicherheitssteuerung für eine Auswahl einer dritten Betriebsart ausgebildet ist, bei der eine Auswertung der ersten Sensorsignale und der zweiten Sensorsignale vorgesehen ist. Bei dieser dritten Betriebsart findet zeitgleich eine Überwachung des Handhabungsbereichs und des Werkstückaufnahmebereichs statt. Hierdurch wird ermöglicht, dass die Annäherungsbewegung des Oberwerkzeugs an die Werkstückauflagefläche vollständig im Eilgang erfolgt und keine Umschaltung auf den Schleichgang erforderlich ist. Ferner wird hierdurch eine Überwachung von Benutzereingriffen seitlich vorbei am Oberwerkzeug in den Werkstückhandhabungsraum hinein ermöglicht.

Für die dritte Betriebsart ist vorgesehen, dass die Sicherheitssteuerung bei Unterschreiten eines ersten Sicherheitsabstands zwischen der Unterkante und der Werkstückauflagefläche eine Ausblendung von Sensorsignalen des zweiten oberen Strahlenempfängers vornimmt und bei Unterschreiten eines zweiten Sicherheitsabstands zwischen der Unterkante und der Werkstückauflagefläche eine Ausblendung von Sensorsignalen des zweiten unteren Strahlenempfängers vornimmt, da diese ansonsten bei der Schließbewegung des Oberwerkzeugs durch das Oberwerkzeug unterbrochen werden würden.

Bei einer Weiterbildung der Erfindung ist vorgesehen, dass die erste optische Sicherungseinrichtung und die zweite optische Sicherungseinrichtung ortsfest am Maschinenbett angeordnet sind. Beispielhaft ist vorgesehen, dass die erste und zweite untere Strahlenquelle und die erste und zweite obere Strahlenquelle an einer quer zur Unterkante erstreckten ersten Seitenkante der Werkstückauflagefläche angeordnet sind. Ferner kann vorgesehen sein, dass der erste sowie der zweite untere Strahlenempfänger und der erste sowie der zweite obere Strahlenempfänger an einer an einer quer zur Unterkante erstreckten zweiten Seitenkante der Werkstückauflagefläche angeordnet sind und damit jeweils exakt gegenüberliegend zu den Strahlenquellen angeordnet sind.

In weiterer Ausgestaltung der Erfindung ist vorgesehen, dass die erste optische Sicherungseinrichtung und die zweite optische Sicherungseinrichtung linearbeweglich am Oberwerkzeug angeordnet sind. Bevorzugt ist vorgesehen, dass die erste optische Sicherungseinrichtung und die zweite optische Sicherungseinrichtung gemeinsam an einem linearbeweglich am Oberwerkzug angebrachten Träger angeordnet sind, wobei der Träger für eine lineare Relativbewegung längs der Bewegungsachse gegenüber dem Oberwerkzeug ausgebildet ist. Besonders bevorzugt ist vorgesehen, dass der Träger mit den daran aufgenommenen Sicherungseinrichtungen sich zunächst in einer ersten Funktionsposition befindet und auch bei einer Annäherungsbewegung des Oberwerkzeugs an die Werkstückauflagefläche ausgehend von einem maximalen Abstand des Oberwerkzeugs gegenüber der Werkstückauflagefläche zunächst keine Relativbewegung gegenüber dem Oberwerkzeug durchführt. Erst wenn das Oberwerkzeug derart an die Werkstückauflagefläche angenähert ist, dass die von den ersten und zweiten unteren Strahlenquellen in Richtung der ersten und zweiten Strahlenempfänger ausgesendeten optischen Strahlen dem zweiten Handhabungsabstand entsprechen, ist eine Relativbewegung zwischen dem Träger und dem Oberwerkzeug vorgesehen, wobei der Träger hierbei von der ersten Funktionsposition in eine zweite Funktionsposition verlagert wird. Durch diese Relativbewegung wird sichergestellt, dass sich die von den ersten und zweiten unteren Strahlenquellen in Richtung der ersten und zweiten Strahlenempfänger ausgesendeten optischen Strahlen nicht näher an die Werkstückauflagefläche annähern, als dies durch den zweiten Handhabungsabstand vorgegeben ist, während das Oberwerkzeug mit seiner Annäherungsbewegung fortfährt. Bevorzugt ist vorgesehen, dass der Träger mit einer Feder gegenüber dem Oberwerkzeug in die erste Funktionsposition vorgespannt ist und bei der Annäherungsbewegung des Oberwerkzeugs an die Werkstückauflagefläche auf einen dem Werkstücktisch zugeordneten Anschlag aufläuft, wodurch es zu einer Erhöhung der Federspannung kommt und die gewünschte Relativbewegung zwischen Oberwerkzeug und Träger stattfinden kann, bei der der Träger in die zweite Funktionsposition verlagert wird. Bei einer nachfolgenden Entfernungsbewegung des Oberwerkzeugs von der Werkstückauflagefläche wird dann der Träger wieder vom Anschlag abgehoben und kehrt wieder in seine erste Funktionsposition zurück.

Bevorzugt ist vorgesehen, dass die Sicherheitssteuerung für eine Ansteuerung einer Einstelleinrichtung für eine Positionierung der ersten optischen Sicherungseinrichtung und der zweiten optischen Sicherungseinrichtung zwischen der ersten Funktionsposition und der zweiten Funktionsposition ausgebildet ist. Hierdurch kann eine Anpassung des Bewegungsverhaltens zwischen dem Träger mit den daran aufgenommenen ersten und zweiten optischen Sicherungseinrichtungen und dem Oberwerkzeug vorgenommen werden.

Vorteilhaft ist es, wenn das Oberwerkzeug als Werkstückhalter zur Festlegung eines Werkstücks am Werkstücktisch ausgebildet ist und wenn am Werkstücktisch eine längs der Vorderkante der Werkstückauflagefläche erstreckte Biegewange schwenkbeweglich angebracht ist, wobei eine Schwenkachse der Biegewange parallel zur Unterkante und zur Vorderkante ausgerichtet ist. Bei dieser Ausführungsform des Oberwerkzeugs wird die Deformation des Werkstücks durch die schwenkbewegliche Biegewange vorgenommen, während dem Oberwerkzeug die Aufgabe zukommt, das Werkstück auf die Werkstückauflagefläche zu pressen. Eine derart ausgebildete Biegemaschine wird auch als Schwenkbiegemaschine bezeichnet.

Die Aufgabe der Erfindung wird gemäß einem zweiten Erfindungsaspekt durch ein Verfahren zum Betreiben einer Biegemaschine gelöst, dass die folgenden Schritte umfasst: Durchführen eines Auswahlverfahrens für eine werkstückabhängige Betriebsart für eine Sicherheitssteuerung einer Biegemaschine aus der Gruppe: erste Betriebsart für ein Werkstück mit einer seitlichen Aufkantung hinter einer Biegelinie, zweite Betriebsart für ein Werkstück mit einer seitlichen Aufkantung vor der Biegelinie; Aufschieben eines Werkstücks in einer Aufschiebebewegung in einer Aufschieberichtung auf eine Werkstückauflagefläche der Biegemaschine, wobei eine Biegelinie des Werkstücks in einer Bewegungsebene angeordnet wird, die von einer Unterkante eines Oberwerkzeugs der Biegemaschine und einer Bewegungsachse des linearbeweglich gegenüber der Werkstückauflagefläche gelagerten Oberwerkzeugs aufgespannt wird, Aktivieren einer ersten optischen Sicherungseinrichtung durch die Sicherheitssteuerung für den Fall, dass die erste Betriebsart ausgewählt wurde, wobei die erste optische Sicherungseinrichtung in einem Handhabungsraum der Biegemaschine angeordnet ist, der sich ausgehend vom Oberwerkzeug entgegen der Aufschieberichtung vor der Bewegungsebene erstreckt, oder Aktivieren einer zweiten optischen Sicherungseinrichtung durch die Sicherheitssteuerung für den Fall, dass die zweite Betriebsart ausgewählt wurde, wobei die zweite optische Sicherungseinrichtung in einem Werkstückaufnahmeraum der Biegemaschine angeordnet ist, der sich ausgehend vom Oberwerkzeug in der Aufschieberichtung hinter der Bewegungsebene erstreckt.

Die Durchführung des Auswahlverfahrens kann entweder durch eine manuelle Benutzereingabe an der Biegemaschine oder durch Auswertung eines Datensatzes in einer Maschinensteuerungen der Biegemaschine, der beispielsweise von einer übergeordneten Steuerung bereitgestellt wurde, durchgeführt werden. Die Zielsetzung des Auswahlverfahrens besteht darin, eine Vorgabe für die Sicherheitssteuerung im Hinblick auf die Verwendung bzw. Ausblendung von Sensorsignalen der ersten und zweiten optischen Sicherungseinrichtung machen zu können. Bei einer Auswahl der ersten Betriebsart wird davon ausgegangen, dass das Werkstück wenigstens eine seitliche Aufkantung aufweist, die bei einer Positionierung des Werkstücks auf der Werkstückauflagefläche mit einer Anordnung der zu erstellenden Biegelinie am Werkstück in der Bewegungsebene der Unterkante dazu führen würde, dass bei der Werkstückbearbeitung eine Unterbrechung zumindest des zweiten unteren optischen Strahls durch die Aufkantung erfolgen würde. Da bei der Auswahl der ersten Betriebsart keine wegabhängige Ausblendung von Sensorsignalen erforderlich ist, kann hierbei auf eine Verwendung von Wegsignalen einer Wegmesseinrichtung verzichtet werden. Dementsprechend ist bei der Auswahl der ersten Betriebsart eine Ausblendung der zweiten optischen Sicherungseinrichtung vorgesehen.

Bei der zweiten Betriebsart wird davon ausgegangen, dass das Werkstück wenigstens eine seitliche Aufkantung aufweist, die bei einer Positionierung des Werkstücks auf der Werkstückauflagefläche mit einer Anordnung der zu erstellenden Biegelinie am Werkstück in der Bewegungsebene der Unterkante dazu führen würde, dass bei der Werkstückbearbeitung eine Unterbrechung des ersten unteren optischen Strahls durch die Aufkantung erfolgen würde. Dementsprechend ist bei der Auswahl der zweiten Betriebsart eine Ausblendung der ersten optischen Sicherungseinrichtung vorgesehen.

Anschließend wird das Werkstück in einer vorzugsweise horizontal ausgerichteten Aufschiebebewegung auf die Werkstückauflagefläche aufgeschoben und derart gegenüber der Bewegungsebene, die durch die Unterkante des Oberwerkzeugs und die Bewegungsachse für das Oberwerkzeug aufgespannt wird, angeordnet, dass die Biegelinie in der Bewegungsebene liegt. Die Biegelinie stellt diejenige Linie dar, um die eine Abwicklung eines Teilbereichs des Werkstücks im Zuge des Umformverfahrens, das mit der Biegemaschine durchgeführt werden soll, erfolgt.

Bei einer Auswahl der ersten Betriebsart erfolgt anschließend eine Aktivierung der ersten optischen Sicherungseinrichtung, die den Handhabungsraum absichert, der ausgehend vom Oberwerkzeug dem Benutzer zugewandt ist, während eine Deaktivierung oder Ausblendung der zweiten optischen Sicherungseinrichtung vorgenommen wird, um einen unerwünschten Abbruch des Bearbeitungsvorgangs zu vermeiden, wie er bei eine Unterbrechung der optischen Strahlen, insbesondere des zweiten unteren optischen Strahls, der zweiten optischen Sicherungseinrichtung eintreten könnte. In der ersten Betriebsart ist vorzugsweise vorgesehen, dass keine Ausblendung oder Deaktivierung der ersten optischen Sicherungseinrichtung vorgenommen wird.

Anschließend erfolgt eine Annäherung des Oberwerkzeugs an das Werkstück, um im Fall einer als Schwenkbiegemaschine ausgebildeten Biegemaschine eine Festlegung des Werkstücks am Werkstücktisch zu gewährleisten und im Fall einer als Abkantpresse ausgebildeten Biegemaschine unmittelbar den gewünschten Deformationsvorgang vorzunehmen. Hierzu kann eine vollständige Ausblendung der Sensorsignale der ersten und der zweiten optischen Sicherungseinrichtung vorgenommen werden.

Sofern während der Annäherung des Oberwerkzeugs an das Werkstück eine Unterbrechung des ersten unteren optischen Strahls oder des ersten oberen optischen Strahls der ersten optischen Sicherungseinrichtung erfolgen sollte, wird dies von der Sicherheitssteuerung anhand der Sensorsignale des ersten unteren Strahlenempfängers bzw. des ersten oberen Strahlenempfängers detektiert und führt zu einer Abschaltung eine Antriebseinrichtung für das Oberwerkzeug.

Bei einer Auswahl der zweiten Betriebsart erfolgt anschließend eine Aktivierung der zweiten optischen Sicherungseinrichtung, die den Werkstückaufnahmeraum absichert, der ausgehend vom Oberwerkzeug dem Benutzer abgewandt ist, während eine Deaktivierung oder Ausblendung der ersten optischen Sicherungseinrichtung vorgenommen wird, um einen unerwünschten Abbruch des Bearbeitungsvorgangs zu vermeiden, wie er bei eine Unterbrechung der optischen Strahlen, insbesondere des ersten unteren optischen Strahls, der ersten optischen Sicherungseinrichtung eintreten könnte.

Anschließend erfolgt eine Annäherung des Oberwerkzeugs an das Werkstück, um im Fall einer als Schwenkbiegemaschine ausgebildeten Biegemaschine eine Festlegung des Werkstücks am Werkstücktisch zu gewährleisten und im Fall einer als Abkantpresse ausgebildeten Biegemaschine unmittelbar den gewünschten Deformationsvorgang vorzunehmen.

Sofern während der Annäherung des Oberwerkzeugs an das Werkstück eine Unterbrechung des zweiten unteren optischen Strahls oder des zweiten oberen optischen Strahls der zweiten optischen Sicherungseinrichtung erfolgen sollte, wird dies von der Sicherheitssteuerung anhand der Sensorsignale des zweiten unteren Strahlenempfängers bzw. des zweiten oberen Strahlenempfängers detektiert und führt zu einer Abschaltung eine Antriebseinrichtung für das Oberwerkzeug.

Bei Unterschreiten des ersten Handhabungsabstands zwischen der Unterkante und der Werkstückauflagefläche wird das Sensorsignal des zweiten oberen Strahlenempfängers ausgeblendet. Bei Unterschreiten des ersten Handhabungsabstands zwischen der Unterkante und der Werkstückauflagefläche wird das Sensorsignal des zweiten unteren Strahlenempfängers ausgeblendet.

Gegebenenfalls kann die Sicherheitssteuerung in der ersten Betriebsart und/oder in der zweiten Betriebsart eine Umkehrbewegung für das Oberwerkzeug hervorrufen, um im Fall einer sicherheitsgerichteten Unterbrechung des Bearbeitungsvorgangs für das Werkstück den Arbeitsspalt zwischen der Unterkante des Oberwerkzeugs und der Werkstückauflagefläche schnell wieder zu vergrößern und damit das Gefahrenpotenzial durch das Oberwerkzeug weiter zu reduzieren.

Bei einer Weiterbildung des Verfahrens ist vorgesehen, dass in der ersten Betriebsart während einer Annäherung des Oberwerkzeugs an die Werkstückauflagefläche bei Unterschreiten eines ersten Sicherheitsabstands, der auch als erster Handhabungsabstand bezeichnet wird, zwischen der Unterkante des Oberwerkzeugs und der Werkstückauflagefläche keine Ausblendung eines Sensorsignals eines ersten oberen Strahlenempfängers der ersten optischen Sicherungseinrichtung vorgenommen wird und dass bei Unterschreiten eines zweiten Sicherheitsabstands, der auch als zweiter Handhabungsabstand bezeichnet wird, zwischen der Unterkante des Oberwerkzeugs und der Werkstückauflagefläche keine Ausblendung eines Sensorsignals eines ersten unteren Strahlenempfängers der ersten optischen Sicherungseinrichtung vorgenommen wird. Dabei sind der erste Sicherheitsabstand (erster Handhabungsabstand) und der zweite Sicherheitsabstand (zweiter Handhabungsabstand) mit rein exemplarisch 12mm und 6mm Abstand von der Werkstückauflagefläche bemessen.

In weiterer Ausgestaltung des Verfahrens ist vorgesehen, dass in der zweiten Betriebsart während einer Annäherung des Oberwerkzeugs an die Werkstückauflagefläche bei Unterschreiten eines ersten Sicherheitsabstands, der auch als erster Eingriffsabstand bezeichnet wird, zwischen der Unterkante des Oberwerkzeugs und der Werkstückauflagefläche eine Ausblendung eines Sensorsignals eines zweiten oberen Strahlenempfängers der zweiten optischen Sicherungseinrichtung vorgenommen wird und dass bei Unterschreiten eines zweiten Sicherheitsabstands, der auch als zweiter Eingriffsabstand bezeichnet wird, zwischen der Unterkante des Oberwerkzeugs und der Werkstückauflagefläche eine Ausblendung eines Sensorsignals eines zweiten unteren Strahlenempfängers der zweiten optischen Sicherungseinrichtung vorgenommen wird. Durch diese Ausblendungen wird eine unerwünschte Abschaltung der Antriebseinrichtung für das Oberwerkzeug vermieden, wobei der erste Sicherheitsabstand (erster Eingriffsabstand) und der zweite Sicherheitsabstand (zweiter Eingriffsabstand) mit rein exemplarisch 12mm und 6mm Abstand von der Werkstückauflagefläche derart bemessen sind, dass zum Zeitpunkt der Ausblendung des jeweiligen Sensorsignals die jeweils erforderliche Reduktion des Gefahrenpotenzials, das von der Annäherungsbewegung des Oberwerkzeugs an die Werkstückauflagefläche und an das darauf aufliegende Werkstück ausgeht, gewährleistet ist.

Bei einer vorteilhaften Weiterbildung des Verfahrens ist vorgesehen, dass bei der Durchführung des Auswahlverfahrens für die werkstückabhängige Betriebsart der Sicherheitssteuerung der Biegemaschine eine dritte Betriebsart für ein Werkstück ohne seitliche Aufkantungen bereitgestellt wird und dass bei einer Auswahl der dritten Betriebsart eine Aktivierung der ersten Sicherungseinrichtung und der zweiten Sicherungseinrichtung durch die Sicherheitssteuerung vorgenommen wird und während einer Annäherung des Oberwerkzeugs an die Werkstückauflagefläche bei Unterschreiten eines ersten Sicherheitsabstands zwischen der Unterkante des Oberwerkzeugs und der Werkstückauflagefläche eine Ausblendung eines zweiten Sensorsignals eines zweiten oberen Strahlenempfängers der zweiten optischen Sicherungseinrichtung vorgenommen wird und dass bei Unterschreiten eines zweiten Sicherheitsabstands (6mm) zwischen der Unterkante des Oberwerkzeugs und der Werkstückauflagefläche eine Ausblendung eines Sensorsignals eines zweiten unteren Strahlenempfängers der zweiten optischen Sicherungseinrichtung vorgenommen wird.

Die dritte Betriebsart ist für den Fall vorgesehen, dass das Werkstück keine von einer parallel zur Werkstückauflagefläche ausgerichteten Oberseite des Werkstücks abragenden Konturen aufweist, die zu einer unerwünschten Unterbrechung der optischen Strahlen der ersten und zweiten optischen Sicherungseinrichtung führen würden. In der dritten Betriebsart kann insbesondere vorgesehen sein, dass die Annäherung des Oberwerkzeugs an die Werkstückauflagefläche im Eilgang ohne eine Umschaltung in den Schleichgang durchgeführt wird. Für eine vollständige Annäherung des Oberwerkzeugs an die Werkstückauflagefläche im Eilgang ist es vorteilhaft, wenn keine wegabhängige Ausblendung der Sensorsignale der ersten optischen Sicherungseinrichtung vorgenommen wird.

Eine vorteilhafte Ausführungsform der Erfindung ist in der Zeichnung dargestellt. Hierbei zeigt:
- Figur 1: eine Vorderansicht einer rein exemplarisch als Schwenkbiegemaschine ausgebildeten Biegemaschine, die mit einer ersten optischen Sicherungseinrichtung und mit einer zweiten optischen Sicherungseinrichtung sowie einer zugeordneten Sicherheitssteuerung ausgerüstet ist,
- Figur 2: eine schematische, teilweise geschnittene Seitenansicht der Biegemaschine gemäß der Figur 1,
- Figur 3: eine schematische, teilweise geschnittene Seitenansicht einer Variante der Biegemaschine gemäß der Figur 1, bei der die erste optische Sicherungseinrichtung und die zweite optische Sicherungseinrichtung ortsfest am Maschinengestell angeordnet sind,
- Figur 4: eine schematische Darstellung eines Werkstücks, das mit einer Aufkantung hinter einer Biegelinie versehen ist, und
- Figur 5: eine schematische Darstellung eines Werkstücks, das mit einer Aufkantung vor einer Biegelinie versehen ist.

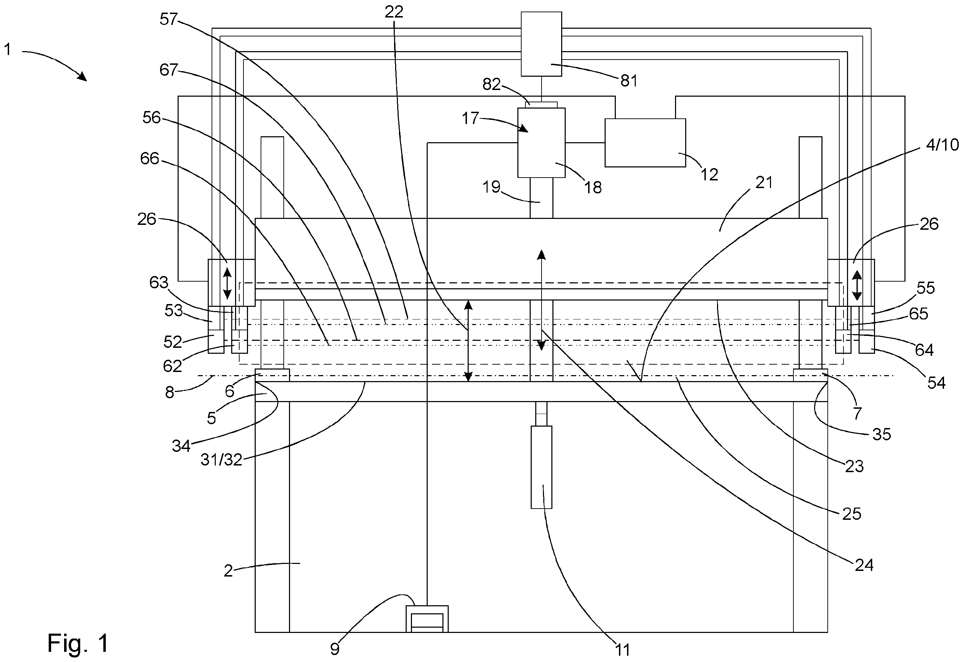

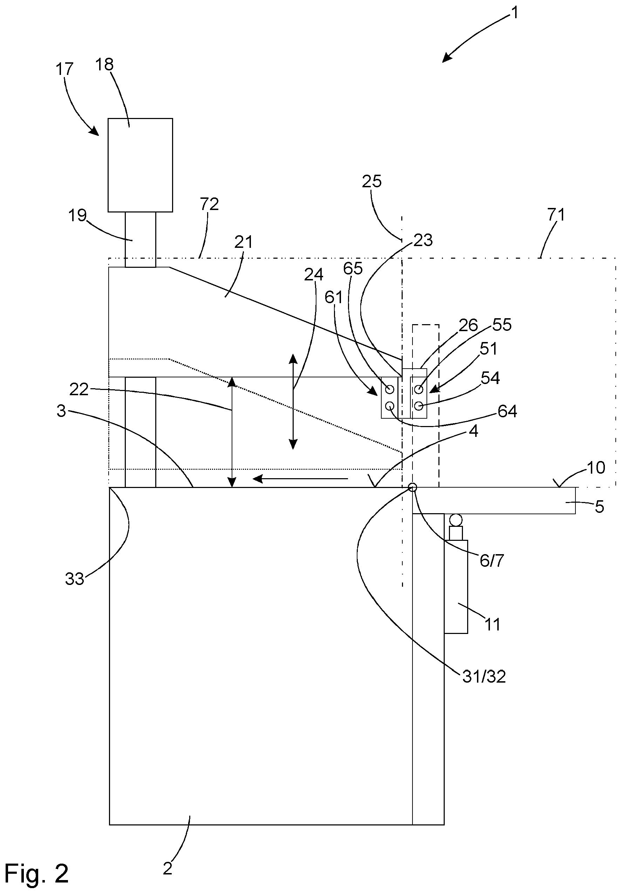

Eine in den Figuren 1 und 2 dargestellte, rein exemplarisch als Schwenkbiegemaschine ausgebildete Biegemaschine 1 umfasst ein Maschinenbett 2, an dem ein Werkstücktisch 3 ausgebildet ist, der eine exemplarisch eben ausgebildete Werkstückauflagefläche 4 umfasst. Gemäß den Darstellungen in den Figuren 1 und 2 ist die rein exemplarisch rechteckige Werkstückauflagefläche 4 horizontal ausgerichtet und erstreckt sich von einer in der Figur 1 sichtbaren Vorderkante 32 bis zu einer in der Figur 2 sichtbaren Hinterkante 33. Ferner erstreckt sich die Werkstückauflagefläche 4 von einer linken Seitenkante 34 bis zu einer rechten Seitenkante 35.

Ferner ist am Maschinenbett 2 eine Biegewange 5 schwenkbeweglich angeordnet, die sich mit einer längsten Kante 31 entlang der Vorderkante 32 der Werkstückauflagefläche 4 erstreckt. An einander entgegengesetzten Endbereichen ist die Biegewange 5 jeweils mit einem Schwenkgelenk 6, 7 am Maschinenbett 1 angebracht. Die Schwenkgelenke 6, 7 weisen eine gemeinsame Schwenkachse 8 auf, die parallel zur Werkstückauflagefläche 4 ausgerichtet ist.

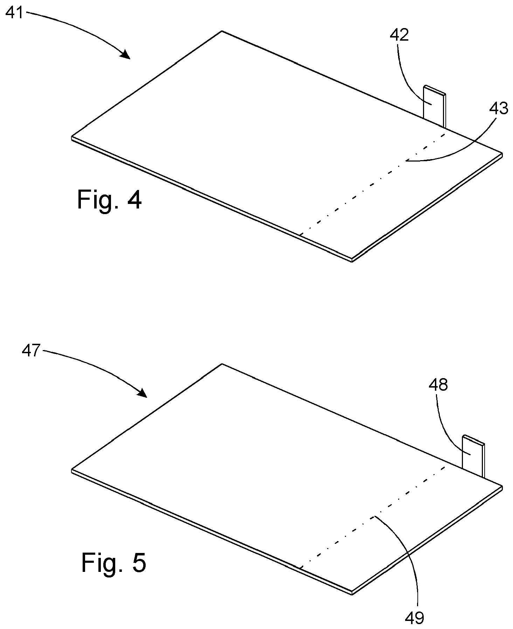

Eine Arbeitsfläche 10 der Biegewange 5 kann mittels eines Schwenkantriebs 31 durch eine Schwenkbewegung der Biegewange 5 aus der in den Figuren 1 und 4 dargestellten Ruhestellung, in der die Arbeitsfläche 10 parallel und flächenbündig zur Werkstückauflagefläche 5 angeordnet ist, in eine in der Figur 2 gestrichelt dargestellte Funktionsstellung verschwenkt werden. In der Funktionsstellung nimmt die Arbeitsfläche 10 exemplarisch einen rechten Winkel gegenüber der Werkstückauflagefläche 4 ein, andere Winkelstellungen sind ebenfalls möglich. Eine Einleitung der Schwenkbewegung für die Biegewange 5 erfolgt über einen Fußschalter 9, der mit einer Maschinensteuerung 12 verbunden ist, die die Bewegung des Schwenkantriebs 31 steuern oder regeln kann.

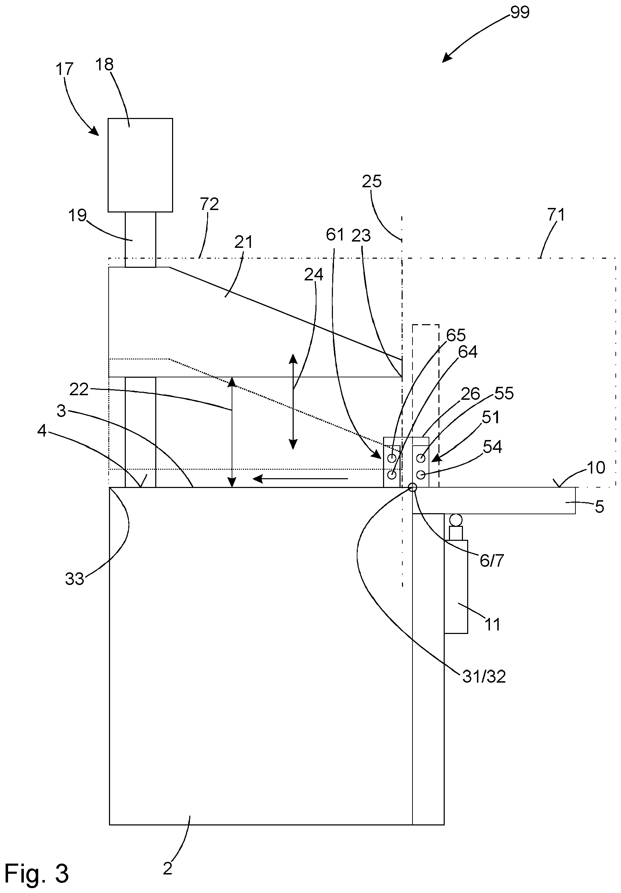

Zur Festlegung eines in den Figuren 3 und 4 gezeigten Werkstücke 41 bzw. 47 an dem Werkstücktisch 3 ist ein beweglich am Maschinenbett 2 angebrachtes, auch als Klemmwange bezeichnetes, Oberwerkzeug 21 vorgesehen. Das Oberwerkzeug 21 ist beidseitig mit nicht dargestellten Führungsmitteln an Führungssäulen 15, 16, die ihrerseits am Maschinenbett 2 festgelegt sind, linearbeweglich geführt. Ein Abstand 22 zwischen einer Unterkante 23 des Oberwerkzeugs 21 und dem Werkstücktisch 3 kann mittels eines Spindelantriebs 17 eingestellt werden, der einen Elektromotor 18 und eine Antriebsspindel 19 umfasst. Eine Bewegung des Oberwerkzeugs 21 zwischen einer in der Figur 1 gezeigten ersten Funktionsstellung mit maximalem Abstand 11 gegenüber der Werkstückauflagefläche 4 und einer nicht gezeigten zweiten Funktionsstellung mit minimalem Abstand 22 gegenüber der Werkstückauflagefläche 4 kann damit längs einer als Doppelpfeil eingezeichneten Bewegungsachse 24 durchgeführt werden. Dabei bewegt sich die Unterkante 23 des Oberwerkzeugs 21 bei der Bewegung des Oberwerkzeugs 21 zwischen der ersten Funktionsstellung und der zweiten Funktionsstellung in einer gestrichelt in den Figuren 1 und 2 eingezeichneten Bewegungsebene 25, die quer zur Werkstückauflagefläche 4 ausgerichtet ist und die Unterkante 23 beinhaltet. Dem Oberwerkzeug 21 sind eine erste optische Sicherungseinrichtung 51 und eine zweite optische Sicherungseinrichtung 61 zugeordnet.

Die erste optische Sicherungseinrichtung 51 umfasst eine erste untere Strahlquelle 52, eine erste obere Strahlquelle 53, einen ersten unteren Strahlenempfänger 54 sowie einen ersten Strahlenempfänger 55. Die zweite optische Sicherungseinrichtung 61 umfasst eine zweite untere Strahlquelle 62, eine zweite obere Strahlquelle 63, einen zweiten unteren Strahlenempfänger 64 sowie einen zweiten oberen Strahlenempfänger 65. Zwischen den jeweiligen optischen Strahlenquellen 52, 53 sowie 62, 63 und den zugeordneten optischen Strahlenempfängern 54, 55 sowie 64, 65 verlaufen jeweils symbolisch in unterschiedlicher gestrichelter Darstellung eingezeichnete erste untere und obere sowie zweite untere und obere Laserstrahlen 56, 57, 66, 67. Um in der Figur 1 alle Laserstrahlen 56, 57, 66, 67 darstellen zu können, sind diese in unterschiedlichem Abstand zur Werkstückauflagefläche 4 eingezeichnet. In der Praxis kann jedoch vorgesehen sein, dass die jeweiligen unteren Laserstrahlen 56, 66 in einer gemeinsamen Horizontalebene und/oder die jeweiligen oberen Laserstrahlen 57, 67 in einer gemeinsamen Horizontalebene angeordnet sind, wie dies auch aus der Figur 2 entnommen werden kann.

Die Strahlenquellen 52, 53, 62, 63 können beispielsweise als diskrete Laserdioden ausgebildet sein und sind vorzugsweise derart konfiguriert, dass die jeweiligen Laserstrahlen 56, 57, 66, 67 in Form von parallelen Strahlenbündeln mit nahezu punktförmigem Querschnitt ausgesendet werden. Exemplarisch sind die Strahlenempfänger 54, 55, 64, 65 derart ausgerichtet, dass die jeweiligen Laserstrahlen 56, 57, 66, 67 jeweils auf nicht eingezeichnete Bereiche der jeweiligen Strahlenempfängers 54, 55, 64, 65 auftreffen, die eine maximale optische Empfindlichkeit aufweisen.

Beide optische Sicherungseinrichtungen 51 und 61 sind jeweils an Halteeinrichtungen 26 angebracht, die ihrerseits linearbeweglich am Oberwerkzeug 21 angeordnet sind und eine lineare Relativbewegung der optischen Sicherungseinrichtungen 51 und 61 längs der Bewegungsachse 24 relativ zum Oberwerkzeug 21 ermöglichen. Hierbei ist vorgesehen, dass lineare Bewegungen der Halteeinrichtungen 26 relativ zum Oberwerkzeug 21 von der Maschinensteuerung 12 derart koordiniert werden, dass sich die jeweiligen Strahlenquellen 52, 53, 62, 63 und die zugeordneten Strahlenempfänger 50, 55, 64, 65 stets gegenüberliegen.

Die Sicherheitssteuerung 81 ist elektrisch über nicht bezeichnete Sensorleitungen mit den optischen Sicherungseinrichtungen 51 und 61 verbunden und ist für die Auswertung von Sensorsignalen der Strahlenempfänger 54, 55, 64, 65 sowie für eine Ansteuerung einer Abschalteinrichtung 82 ausgebildet. Bei der Abschalteinrichtung 82 kann es sich beispielsweise um ein elektrisches Schütz für den Elektromotor 18 handeln. Hiermit kann die Sicherheitssteuerung 81 beispielsweise trotz einer Bereitstellung von elektrischer Energie durch die Maschinensteuerung 12 an den Elektromotor 18 eine Stilllegung des Antriebsmotors 18 durch Unterbrechung der Energiezufuhr bewirken.

Aus der Seitenansicht gemäß der Figur 2 sind lediglich die Strahlenempfänger 54, 55, 64, 65 erkennbar, während die jeweils zugeordneten Strahlenquellen 52, 53, 62, 63 in der Figur 2 nicht dargestellt sind.

In der Figur 2 ist die Bewegungsebene 25 als vertikale Ebene eingezeichnet und umfasst die Unterkante 23 des Oberwerkzeugs 21 sowohl in der ersten Funktionsstellung, bei der der Abstand 22 gegenüber der Werkstückauflagefläche 4 maximal ist, als auch in der zweiten Funktionsstellung, bei der das Oberwerkzeug 21 lediglich gestrichelt dargestellt ist.

Ferner kann der Figur 2 entnommen werden, dass der erste untere Strahlenempfänger 54 und der erste obere Strahlenempfänger 55 in einem Handhabungsraum 71 benachbart zur Bewegungsebene 25 angeordnet sind. Der Handhabungsraum 71 erstreckt sich ausgehend von der Bewegungsebene 25 in Richtung der Vorderkante 32 der Werkstückauflagefläche 4 und darüber hinaus, wobei sich der Handhabungsraum 71 damit entgegen einer Aufschieberichtung 91 erstreckt, die bei einem Einschieben eines der Werkstücke 41 oder 47 in die Biegemaschine 1 genutzt wird. Der Handhabungsbereich repräsentiert denjenigen Raumbereich, in dem ein nicht dargestellter Benutzer eine Handhabung von Werkstücken vornimmt, von wo aus beispielsweise die Werkstücke 41, 47 in die Biegemaschine 1 in der Aufschieberichtung 91 eingeschoben oder entgegen der Aufschieberichtung 91 nach Durchführung des Umformvorgangs aus der Biegemaschine 1 entnommen werden.

Der zweite untere Strahlenempfänger 64 und der zweite obere Strahlenempfänger 65 sind hingegen in einem Werkstückaufnahmeraum 72 aufgenommen, der sich ausgehend von der Bewegungsebene 25 in Richtung der Hinterkante 33 der Werkstückauflagefläche 4 und damit in der Aufschieberichtung 91 erstreckt.

Bei einer Annäherungsbewegung des Oberwerkzeugs 21 mit den daran aufgenommenen optischen Sicherungseinrichtungen 51, 61 aus der ersten Funktionsstellung gemäß der Figur 2 in die zweite Funktionsstellung gemäß der Figur 2 ist zunächst vorgesehen, dass keine Relativbewegung der Halteeinrichtungen 26 gegenüber dem Oberwerkzeug 21 stattfindet. Sobald jedoch die unteren Laserstrahlen 56, 66 an einen nicht eingezeichneten Sicherheitsabstand, der beispielsweise 6mm gegenüber der Werkstückauflagefläche 4 betragen kann, angenähert werden, erfolgt über die Sicherheitssteuerung 81 eine Ansteuerung von nicht dargestellten Antrieben der Halteeinrichtung 26, sodass der Sicherheitsabstand der unteren Laserstrahlen 56, 66 trotz einer weiteren Bewegung des Oberwerkzeugs 21 konstant gehalten wird.

In Abhängigkeit von einer ausgewählten Betriebsart für die Biegemaschine 1 werden während dieser Annäherungsbewegung entweder nur die Sensorsignale der ersten optischen Sicherungseinrichtung 51 (erste Betriebsart) oder nur die Sensorsignale der zweiten optischen Sicherungseinrichtung 61 (zweite Betriebsart) oder die Sensorsignale beider optischen Sicherungseinrichtungen 51, 61 (dritte Betriebsart) von der Sicherheitssteuerung ausgewertet.

Soll beispielsweise ein in der Figur 4 nur schematisch dargestelltes Werkstück 41 bearbeitet werden, dass eine seitliche Aufkantung 42 aufweist, die für den vorgesehenen Biegevorgang längs einer Biegelinie 43 im Werkstückaufnahmeraum 72 der Biegemaschine 1 angeordnet werden muss, wird die erste Betriebsart für die Biegemaschine 1 gewählt, bei der ausschließlich die Sensorsignale der ersten optischen Sicherungseinrichtung 51 ausgewertet werden. Bevorzugt ist bei der ersten Betriebsart vorgesehen, dass während des gesamten Schließvorgangs für das Oberwerkzeug keine Ausblendung der Sensorsignale der ersten optischen Sicherungseinrichtung 51 vorgenommen wird.

Soll hingegen ein in der Figur 5 nur schematisch dargestelltes Werkstück 47 bearbeitet werden, dass eine seitliche Aufkantung 48 aufweist, die für den vorgesehenen Biegevorgang längs einer Biegelinie 49 im Handhabungsraum 71 der Biegemaschine 1 angeordnet werden muss, wird die zweite Betriebsart für die Biegemaschine 1 gewählt, bei der ausschließlich die Sensorsignale der zweiten optischen Sicherungseinrichtung 61 ausgewertet werden. Bevorzugt ist bei der zweiten Betriebsart vorgesehen, dass während des Schließvorgangs für das Oberwerkzeug eine wegabhängige Ausblendung der Sensorsignale der zweiten optischen Sicherungseinrichtung 61 vorgenommen wird.

Die in der Figur 3 dargestellte Variante einer Biegemaschine 99 unterscheidet sich von der Variante der Biegemaschine 1 gemäß den Figuren 1 und 2 lediglich durch die Anordnung der beiden optischen Sicherungseinrichtungen 51 und 51, die bei dieser Variante ortsfest am Maschinenbett 2 angeordnet sind. Ansonsten sind die Komponenten der Biegemaschine 99 in gleicher Weise ausgebildet wie bei der Biegemaschine 1, so dass für die Komponenten die gleichen Bezugszeichen verwendet werden und auf eine neuerliche Beschreibung der Komponenten und Ihrer Funktion verzichtet wird.

## Patentansprüche

1. Biegemaschine (1; 99) mit einem Maschinenbett (2), an dem ein Werkstücktisch (3) ausgebildet ist, der eine zum Auflegen eines Werkstücks (41; 47) ausgebildete Werkstückauflagefläche (4) aufweist, sowie mit einem linearbeweglich längs einer Bewegungsachse (24) am Maschinenbett (2) gelagerten Oberwerkzeug (21), das eine benachbart zur Werkstückauflagefläche (4) angeordnete Unterkante (23) aufweist, wobei die Unterkante (23) mit der Bewegungsachse (24) eine Bewegungsebene (25) begrenzt, in der die Unterkante (23) zwischen einer Öffnungsstellung für das Oberwerkzeug (21) und einer Schließstellung für das Oberwerkzeug (21) beweglich ist, wobei die Bewegungsebene (25) einen Handhabungsraum (71), der sich ausgehend vom Oberwerkzeug (21) in Richtung einer Vorderkante (32) der Werkstückauflagefläche (4) erstreckt, von einem Werkstückaufnahmeraum (72) trennt, der sich von dem Oberwerkzeug (21) zu einer Hinterkante (33) der Werkstückauflagefläche (4) erstreckt und wobei im Handhabungsraum (71) eine erste optische Sicherungseinrichtung (51) und im Werkstückaufnahmeraum (72) eine zweite optische Sicherungseinrichtung (61) angeordnet sind, sowie mit einer Sicherheitssteuerung (81), die für eine Auswertung von ersten Sensorsignalen der ersten optischen Sicherungseinrichtung (51) und von zweiten Sensorsignalen der zweiten optischen Sicherungseinrichtung (61) sowie für eine Abschaltung einer dem Oberwerkzeug (21) zugeordneten Antriebseinrichtung (17) in Abhängigkeit von den ersten und/oder zweiten Sensorsignalen ausgebildet ist, wobei die Sicherheitssteuerung (81) für eine Umschaltung zwischen einer ersten Betriebsart, bei der ausschließlich die ersten Sensorsignale ausgewertet werden, und einer zweiten Betriebsart, bei der ausschließlich die zweiten Sensorsignale ausgewertet werden, ausgebildet ist.

2. Biegemaschine (1; 99) nach Anspruch 1, **dadurch gekennzeichnet, dass** die erste optische Sicherungseinrichtung (51) eine erste untere Strahlquelle (52) aufweist, die für eine Bereitstellung eines ersten unteren optischen Strahls (56) parallel zur Unterkante (23) ausgebildet ist, und die einen ersten unteren Strahlenempfänger (54) aufweist, der zum Empfang des ersten unteren optischen Strahls (56) ausgebildet ist, und dass die erste optische Sicherungseinrichtung (51) eine erste obere Strahlquelle (53) aufweist, die für eine Bereitstellung eines ersten oberen optischen Strahls (57) parallel zur Unterkante (23) ausgebildet ist, und einen ersten oberen Strahlenempfänger (55) aufweist, der zum Empfang des ersten oberen optischen Strahls (57) ausgebildet ist, wobei die erste untere Strahlquelle (52) einen geringeren Abstand zur Werkstückauflagefläche (4) als die erste obere Strahlquelle (53) aufweist.

3. Biegemaschine (1; 99) nach Anspruch 1 oder 2, **dadurch gekennzeichnet, dass** die zweite optische Sicherungseinrichtung (61) eine zweite untere Strahlquelle (62) aufweist, die für eine Bereitstellung eines zweiten unteren optischen Strahls (66) parallel zur Unterkante (23) ausgebildet ist, und einen zweiten unteren Strahlenempfänger (64) aufweist, der zum Empfang des zweiten unteren optischen Strahls (66) ausgebildet ist, und dass die zweite optische Sicherungseinrichtung (61) eine zweite obere Strahlquelle (63) aufweist, die für eine Bereitstellung eines zweiten oberen optischen Strahls (67) parallel zur Unterkante (23) ausgebildet ist, und einen zweiten oberen Strahlenempfänger (65) aufweist, der zum Empfang des zweiten oberen optischen Strahls (67) ausgebildet ist, wobei zweite untere Strahlquelle (62) einen geringeren Abstand zur Werkstückauflagefläche (4) als die zweite obere Strahlquelle (63) aufweist.

4. Biegemaschine (1; 99) nach Anspruch 1, 2 oder 3, **dadurch gekennzeichnet, dass** die Sicherheitssteuerung (81) in der ersten Betriebsart dazu ausgebildet ist, während einer Schließbewegung des Oberwerkzeugs (21) eine Auswertung eines Sensorsignals des ersten oberen Strahlenempfängers (55) sowie eine Auswertung eines Sensorsignals des ersten unteren Strahlenempfängers (54) vorzunehmen.

5. Biegemaschine (1; 99) nach Anspruch 1, 2, 3 oder 4, **dadurch gekennzeichnet, dass** die Sicherheitssteuerung (81) in der zweiten Betriebsart dazu ausgebildet ist, bei Unterschreiten eines ersten Eingriffsabstands zwischen der Unterkante (23) und der Werkstückauflagefläche (4) eine Ausblendung eines Sensorsignals des zweiten oberen Strahlenempfängers (65) vorzunehmen und bei Unterschreiten eines zweiten Eingriffsabstands zwischen der Unterkante (23) und der Werkstückauflagefläche (4) eine Ausblendung eines Sensorsignals des zweiten unteren Strahlenempfängers (64) vorzunehmen.

6. Biegemaschine (1; 99) nach einem der vorhergehenden Ansprüche, **dadurch gekennzeichnet, dass** die Sicherheitssteuerung (81) für eine Auswahl einer dritten Betriebsart ausgebildet ist, bei der eine Auswertung der ersten Sensorsignale und der zweiten Sensorsignale vorgesehen ist.

7. Biegemaschine (1; 99) nach Anspruch 6, **dadurch gekennzeichnet, dass** die Sicherheitssteuerung (81) in der dritten Betriebsart dazu ausgebildet ist, bei Unterschreiten eines ersten Sicherheitsabstands zwischen der Unterkante (23) und der Werkstückauflagefläche (4) eine Ausblendung von Sensorsignalen des zweiten oberen Strahlenempfängers (65) vorzunehmen und bei Unterschreiten eines zweiten Sicherheitsabstands) zwischen der Unterkante (23) und der Werkstückauflagefläche eine Ausblendung von Sensorsignalen des zweiten unteren Strahlenempfängers (62) vorzunehmen.

8. Biegemaschine (1; 99) nach einem der vorhergehenden Ansprüche, **dadurch gekennzeichnet, dass** die erste optische Sicherungseinrichtung (51) und die zweite optische Sicherungseinrichtung (61) ortsfest am Maschinenbett (2) angeordnet sind.

9. Biegemaschine (1; 99) nach einem der vorhergehenden Ansprüche, **dadurch gekennzeichnet, dass** die erste optische Sicherungseinrichtung (51) und die zweite optische Sicherungseinrichtung (61) linearbeweglich am Oberwerkzeug (21) angeordnet sind.

10. Biegemaschine (1; 99) nach einem der vorhergehenden Ansprüche, **dadurch gekennzeichnet, dass** das Oberwerkzeug (21) als Werkstückhalter zur Festlegung eines Werkstücks (41; 47) am Werkstücktisch (3) ausgebildet ist und dass am Werkstücktisch (3) eine längs der Vorderkante (32) der Werkstückauflagefläche (4) erstreckte Biegewange (5) schwenkbeweglich angebracht ist, wobei eine Schwenkachse (8) der Biegewange (5) parallel zur Unterkante (21) und zur Vorderkante (32) ausgerichtet ist.

11. Verfahren zum Betreiben einer Biegemaschine (1; 99) mit den Schritten: Durchführen eines Auswahlverfahrens für eine werkstückabhängige Betriebsart für eine Sicherheitssteuerung (81) einer Biegemaschine (1; 99) aus der Gruppe: erste Betriebsart für ein Werkstück (41) mit einer seitlichen Aufkantung (42) hinter einer Biegelinie (43), zweite Betriebsart für ein Werkstück (47) mit einer seitlichen Aufkantung (48) vor der Biegelinie (49); Aufschieben eines Werkstücks (41; 47) in einer Aufschiebebewegung in einer Aufschieberichtung (91) auf eine Werkstückauflagefläche (4) der Biegemaschine (1; 99), wobei eine Biegelinie (43; 49) des Werkstücks (41; 47) in einer Bewegungsebene (25) angeordnet wird, die von einer Unterkante (23) eines Oberwerkzeugs (21) der Biegemaschine (1; 99) und einer Bewegungsachse (24) des linearbeweglich gegenüber der Werkstückauflagefläche (4) gelagerten Oberwerkzeugs (21) aufgespannt wird, Aktivieren einer ersten optischen Sicherungseinrichtung (51) durch die Sicherheitssteuerung (81) für den Fall, dass die erste Betriebsart ausgewählt wurde, wobei die erste optische Sicherungseinrichtung (51) in einem Handhabungsraum (71) der Biegemaschine (1; 99) angeordnet ist, der sich ausgehend vom Oberwerkzeug (21) entgegen der Aufschieberichtung (91) vor der Bewegungsebene (25) erstreckt, oder Aktivieren einer zweiten optischen Sicherungseinrichtung (61) durch die Sicherheitssteuerung (81) für den Fall, dass die zweite Betriebsart ausgewählt wurde, wobei die zweite optische Sicherungseinrichtung (61) in einem Werkstückaufnahmeraum (72) der Biegemaschine (1; 99) angeordnet ist, der sich ausgehend vom Oberwerkzeug (21) in der Aufschieberichtung (91) hinter der Bewegungsebene (25) erstreckt

12. Verfahren nach Anspruch 11, **dadurch gekennzeichnet, dass** in der ersten Betriebsart während einer Annäherung des Oberwerkzeugs (21) an die Werkstückauflagefläche (4) bei Unterschreiten eines ersten Sicherheitsabstands, insbesondere 12mm bis 15mm, zwischen der Unterkante (23) des Oberwerkzeugs (21) und der Werkstückauflagefläche (4) keine Ausblendung eines Sensorsignals eines ersten oberen Strahlenempfängers (55) der ersten optischen Sicherungseinrichtung (51) vorgenommen wird und dass bei Unterschreiten eines zweiten Sicherheitsabstands, insbesondere 6mm bis 8mm zwischen der Unterkante (23) des Oberwerkzeugs (21) und der Werkstückauflagefläche (4) keine Ausblendung eines Sensorsignals eines ersten unteren Strahlenempfängers (54) der ersten optischen Sicherungseinrichtung (51) vorgenommen wird.

13. Verfahren nach Anspruch 11, **dadurch gekennzeichnet, dass** in der zweiten Betriebsart während einer Annäherung des Oberwerkzeugs (21) an die Werkstückauflagefläche (4) bei Unterschreiten eines ersten Sicherheitsabstands, insbesondere 12mm bis 15mm, zwischen der Unterkante (23) des Oberwerkzeugs (21) und der Werkstückauflagefläche (4) eine Ausblendung eines Sensorsignals eines zweiten oberen Strahlenempfängers (65) der zweiten optischen Sicherungseinrichtung (61) vorgenommen wird und dass bei Unterschreiten eines zweiten Sicherheitsabstands, insbesondere 6mm bis 8mm zwischen der Unterkante (23) des Oberwerkzeugs (21) und der Werkstückauflagefläche (4) eine Ausblendung eines Sensorsignals eines zweiten unteren Strahlenempfängers (64) der zweiten optischen Sicherungseinrichtung (61) vorgenommen wird.

14. Verfahren nach Anspruch 11, **dadurch gekennzeichnet, dass** bei der Durchführung des Auswahlverfahrens für die werkstückabhängige Betriebsart der Sicherheitssteuerung (81) der Biegemaschine (1) eine dritte Betriebsart für ein Werkstück ohne seitliche Aufkantungen bereitgestellt wird und dass bei einer Auswahl der dritten Betriebsart eine Aktivierung der ersten Sicherungseinrichtung (51) und der zweiten Sicherungseinrichtung (61) durch die Sicherheitssteuerung (81) vorgenommen wird und während einer Annäherung des Oberwerkzeugs (21) an die Werkstückauflagefläche (4) bei Unterschreiten eines ersten Sicherheitsabstands, insbesondere 12mm bis 15mm, zwischen der Unterkante (23) des Oberwerkzeugs (21) und der Werkstückauflagefläche (4) eine Ausblendung eines zweiten Sensorsignals eines zweiten oberen Strahlenempfängers (65) der zweiten optischen Sicherungseinrichtung (61) vorgenommen wird und dass bei Unterschreiten eines zweiten Sicherheitsabstands, insbesondere 6mm bis 8mm, zwischen der Unterkante (23) des Oberwerkzeugs (21) und der Werkstückauflagefläche (4) eine Ausblendung eines Sensorsignals eines zweiten unteren Strahlenempfängers (64) der zweiten optischen Sicherungseinrichtung (61) vorgenommen wird.
